(19) Europäisches Patentamt
European Patent Office
Office européen des brevets

(11) **EP 2 392 944 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(51) Int Cl.:
*G01S 7/40* *(2006.01)*    *G01S 13/93* *(2006.01)*

(21) Anmeldenummer: **11161098.6**

(22) Anmeldetag: **05.04.2011**

(54) **Radarsensor und Verfahren zur Detektion von Niederschlag mit einem Radarsensor**

Radar sensor and method for detecting precipitation with a radar sensor

Capteur radar et procédé de détection d'un précipité à l'aide d'un capteur radar

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.06.2010 DE 102010029699**

(43) Veröffentlichungstag der Anmeldung:
**07.12.2011 Patentblatt 2011/49**

(73) Patentinhaber: **Robert Bosch GmbH**
**70442 Stuttgart (DE)**

(72) Erfinder: **Bechler, Dirk**
**76185 Karlsruhe (DE)**

(56) Entgegenhaltungen:
WO-A1-01/50152    WO-A1-2005/062072
DE-A1- 19 803 660    DE-A1- 19 945 268
DE-A1-102006 054 320

EP 2 392 944 B1

**Beschreibung**

Die Erfindung betrifft ein Verfahren zur Detektion von Niederschlag mit einem Radarsensor, wobei der Radarsensor ein Sendesignal emittiert, dessen Frequenz periodisch in aufeinanderfolgenden Modulationsrampen verändert wird und wobei von dem Radarsensor empfangene Signale anhand von mindestens zwei unterschiedlichen Kriterien ausgewertet werden. Die Erfindung betrifft weiterhin einen Radarsensor, der zur Durchführung des Verfahrens eingerichtet ist.

Radarsensoren werden beispielsweise in Kraftfahrzeugen zur Erfassung des Umfeld des Fahrzeugs und zur Ortung und Bestimmung der Relativgeschwindigkeit vorausfahrender oder entgegenkommender Fahrzeuge eingesetzt. Sie können als unabhängige Abstandswarnsysteme benutzt werden oder auch Teil eines Fahrassistenzsystems sein, z.B. zur abstandsbasierten automatischen Geschwindigkeitskontrolle (ACC-Adaptive Cruise Control).

Niederschlag in Form von Regen oder von der Straße aufspritzender Gischt kann einen Teil des emittierten Sendesignals reflektieren und absorbieren und so eine Verringerung der Reichweite der Radarstrahlung und damit eine Verkleinerung des Bereichs, innerhalb dessen Objekte sicher geortet werden können, verursachen. Aus Gründen der Verkehrssicherheit ist es wichtig, dass eine solche Funktionseinschränkung des Radarsensors möglichst früh und sicher festgestellt werden kann.

Aus WO 01/50152 A1 ist ein Verfahren zur Messung des Abstands und der Geschwindigkeit von Objekten bekannt, bei dem anhand charakteristischer Zwischenfrequenzsignale ein Witterungszustand in der Umgebung des Kraftfahrzeugs und/oder eine Störung des Kraftfahrzeugradarsystems bestimmt wird. Ein Messzyklus umfasst mehrere Modulationsrampen des ausgesendeten Signals mit unterschiedlicher Anstiegsgeschwindigkeit der Frequenz. Niederschlag wird daran erkannt, dass Frequenzerhöhungen des empfangenen Signals gegenüber dem ausgesendeten Signal unabhängig vom Modulationshub in allen Modulationsrampen gleich sind und näherungsweise gleich einer Relativgeschwindigkeit des Reflexionsobjektes sind, die der Eigengeschwindigkeit des Fahrzeuges entspricht.

Die Druckschrift WO 2005/062072 A1 beschreibt einen Radarsensor und ein Verfahren zu dessen Betrieb, bei dem Sendeparameter der Sendeeinrichtung und Empfangsparameter der Empfangseinrichtung des Radarsensors veränderbar sind.

Aus der Druckschrift DE 199 45 268 A1 ist ein Verfahren zur Feststellung von Empfindlichkeitsverlusten ("Erblindung") eines Radarsensors, z.B. durch Niederschlag, bekannt, bei dem eine Mehrzahl von Parametern anhand verschiedener Kriterien überprüft wird. Überprüfte und anhand der Kriterien bewertete Parameter werden dabei ggf. unterschiedlich stark gewichtet. Eines der Kriterien beruht auf einer Bewertung der mittleren Leistung der vom Radarsensor empfangenen Signale. Ein Nachteil dieses Verfahrens besteht jedoch darin, dass die mittlere Leistung nicht nur vom Vorhandensein diffuser Verlustquellen wie Niederschlag abhängig ist, sondern auch von einer Vielzahl anderer Faktoren, u.a. von spezifischen Eigenschaften des Radarsensors, Montagetoleranzen beim Einbau in ein Kraftfahrzeug sowie von Temperatur- und Alterungseinflüssen.

Die Druckschrift DE 10 2006 054 320 A1 beschreibt ein Verfahren zur Detektion von Niederschlag mit einem Radarsensor, das ebenfalls auf der Auswertung eines Leistungsmerkmals eines empfangenen Radarsignals beruht. Das Verfahren ist für Mehrstrahl-Radarsensoren, insbesondere FMCW (Frequency Modulated Continuous Wave)-Radarsensoren geeignet. Bei dem Verfahren werden die empfangenen Radarsignale mehrerer Radarstrahlen jeweils gesondert integriert und die resultierenden Integrale werden miteinander verglichen.

Mit Radarsensoren kann die Geschwindigkeit eines Objekts anhand einer Frequenzverschiebung zwischen ausgesendeten und von einem Objekt reflektierten und empfangenen Radarsignal aufgrund des Doppler-Effekts bestimmt werden. Um gleichzeitig eine Information über den Abstand des Objekts vom Radarsensor zu erhalten, ist zusätzlich eine Information über die Laufzeit der Radarsignale erforderlich. Beim FMCW-Radarverfahren kann eine solche Laufzeitinformation erhalten werden, indem die Frequenz des abgestrahlten Radarsignals einer Frequenzmodulation mit einer sich (häufig linear) ändernden Frequenz (Frequenzrampe) unterworfen ist.

Das empfangene Radarsignal wird üblicherweise mit einem Teil des ausgesendeten Signals zu einem Zwischenfrequenzsignal gemischt. Das Frequenzspektrum des Zwischenfrequenzsignals wird analysiert, typischerweise mit Hilfe einer schnellen Fourier-Transformation (FFT-Fast Fourier-Transform). Ein von dem Radarsystem erfasstes Objekt spiegelt sich im Frequenzspektrum in einem Peak bei einer Frequenz wider, die vom Abstand und der Relativgeschwindigkeit des Objekts zum Radarsensor abhängig ist.

Auch Regentropfen oder aufspritzende Gischt stellen in diesem Sinne Objekte dar, die bei nicht zu großen Abständen vom Radarsensor, üblicherweise bei Abständen bis zu etwa 10 Metern, einen schwachen Peak im Frequenzspektrum des Zwischenfrequenzsignals hinterlassen. Bei stärkerem Niederschlag addieren sich diese Peaks in dem Frequenzbereich, der dem zuvor genannten Abstandsbereich entspricht, zu einem Untergrundsignal, dem sogenannten Regenclutter. Bedingt durch den genannten Abstandsbereich wird durch den Regenclutter der Untergrund des Zwischenfrequenzsignals angehoben. Bei niedrigen Fahrzeuggeschwindigkeiten liegt das Signal des Regenclutters im niederfrequenten Signalbereich des Zwischenfrequenzsignals. Bei höheren Geschwindigkeiten verschiebt sich das Signal des Regenclutters zu höheren Frequenzen im Zwischenfrequenzsignal. Zudem ist die Frequenzposition des Regenclutters von der Steigung der Frequenzrampe des abgestrahlten Radarsignals ahängig. Die spektrale Leistungsdichte in dem Frequenzbereich des Regenclutters kann als Indikator für das Vorhandensein von Niederschlag dienen. Problematisch ist dabei jedoch der relativ häufig auftretende Fall, dass die Reflektionspeaks von einem oder mehreren tatsächlichen Objekten sich ebenfalls innerhalb dieses Frequenzbereichs befinden, wodurch fälschlicherweise Niederschlag detektiert wird. Eine solche Situation tritt insbesondere bei Gassen- oder Tunnelfahrten, bei Fahrten direkt neben einem Lkw auf oder auch beim Stand in einer Schlange direkt hinter einem anderen Fahrzeug.

Es ist eine Aufgabe der Erfindung, ein Verfahren zur Detektion von Niederschlag anzugeben, das Niederschlag gesichert erkennt und robust gegenüber Störeinflüssen ist. Es ist eine weitere Aufgabe der Erfindung, einen Radarsensor, der zur Durchführung des genannten Verfahrens eingerichtet ist, zu schaffen.

Diese Aufgabe wird erfindungsgemäß durch ein Verfahren gemäß der Kombination der Merkmale des unabhängigen Anspruchs 1 gelöst. Hiernach wird Niederschlag mittels eines Radarsensors erkannt, indem Sendesignal emittiert wird, dessen Frequenz periodisch in aufeinanderfolgenden Modulationsrampen verändert wird, wobei von dem Radarsensor empfangene Signale mit einem Teil des Sendesignals zu einem Zwischenfrequenzsignal gemischt werden und das Zwischenfrequenzsignal einer Spektralanalyse unterworfen wird und das resultierende Amplitudenspektrum oder Leistungsdichtespektrum anhand von zwei unterschiedlichen Kriterien ausgewertet wird und Niederschlag dann als erkannt gilt, wenn beide Kriterien gleichzeitig erfüllt sind.

Hierzu ist erfindungsgemäß vorgesehen, dass ein erstes Kriterium Signale betrifft, die bei einem Durchfahren einer Modulationsrampe empfangen werden, wobei zur Auswertung des ersten Kriteriums das empfangene Amplittidenspektruin oder das Leistungsdichtespektrum über einen ersten Frequenzbereich integriert wird, der einem ersten Abstandsintervall entspricht, das unterhalb eines Grenzabstands für die Detektion von Niederschlag liegt; und das erste Kriterium abhängig vom Wert des Integrals über das erste Abstandsintervall als erfüllt angesehen wird, oder das Amplitudenspektrum oder das Leistungsdichtespektrum über einen ersten Frequenzbereich integriert wird, der einem ersten Abstandsintervall entspricht, das unterhalb eines Grenzabstands für die Detektion von Ivliederschlag liegt; das Amplitudenspektrum bzw. das Leistungsdichtespektrum über einen zweiten Frequenzbereich integriert wird, der einem zweiten Abstandsintervall entspricht, das oberhalb des Grenzabstands liegt; und das erste Kriterium abhängig vom Verhältnis der Integrale über das erste und das zweite Abstandsintervall als erfüllt angesehen wird und dass ein zweites Kriterium einen Unterschied aus den empfangenen Amplitudenspektren oder Leistungsdichtespektren in einem vorgegebenen Frequenzbereich bei dem Durchfahren von mindestens zwei aufeinanderfolgenden Modulationsrampen betrifft und das zweite Kriterium abhängig von der Größe der Varianz für eine Folge aufeinanderfolgender Messungen der Unterschiede bei Überschreitung eines Schwellenwertes als erfüllt angesehen wird.

Die Erfindung macht sich zunutze, dass sich Niederschlag nicht nur in unterschiedlichen spektralen Leistungsdichten innerhalb eines gemessenen Spektrums beim Durchfahren einer Modulationsrampe widerspiegelt, sondern auch im Vergleich von verschiedenen Spektren, die während aufeinanderfolgender Modulationsrampen aufgezeichnet werden. Die Verschiedenartigkeit der Kriterien erhöht dabei die Sicherheit beim Erkennen von Niederschlag. Ein weiterer Vorteil ist zudem, dass jeweils fehlerträchtige Situationen, die zu einer scheinbaren Erkennung von Niederschlag bei einem der Kriterien führen können, gerade für das jeweils andere Kriterium unproblematisch sind.

Erfindungsgemäß wird Niederschlag dann als erkannt angesehen, wenn beide Kriterien gleichzeitig erfüllt sind. Besonders bevorzugt wird Niederschlag erst dann als erkannt angesehen, wenn beide Kriterien länger als eine vorgegebene Zeitspanne gleichzeitig erfüllt sind.

Weitere vorteilhafte Ausgestaltungen und Weiterbildungen der Erfindung sind in den Unteransprüchen angegeben.

Im folgenden wird die Erfindung anhand von Ausführungsbeispielen von Hilfe von 11 Figuren näher erläutert.

Es zeigen:

Fig. 1        ein Blockdiagramm eines Radarsensors zur Durchführung eines Verfahrens zur Detektion von Niederschlag;

Fig. 2        ein Diagramm zur Darstellung der Zeitabhängigkeit der Frequenz bei einem Sendesignal;

Fig. 3        ein Diagramm zur Darstellung der Zeitabhängigkeit der Sendeleistung bei einem Sendesignal;

Fig. 4        eine Prinzipskizze zur Reflektion von Sendesignalen an einem Objekt und an Niederschlag;

Fig. 5        ein Beispiel eines Spektrum eines Zwischenfrequenzsignals eines Radarsensors bei Abwesenheit von Niederschlag;

Fig. 6        ein Beispiel eines Spektrum eines Zwischenfrequenzsignals eines Radarsensors beim Vorliegen von Niederschlag;

Fig. 7        schematische Zwischenfrequenzspektren für verschiedene Sendeleistungen eines Sendesignals;

Fig. 8        eine Darstellung von Signalleistungsunterschieden bei aufeinanderfolgenden Zwischenfrequenzspektren bei Abwesenheit von Niederschlag;

Fig. 9        eine Darstellung von Signalleistungsunterschieden bei aufeinanderfolgenden Zwischenfrequenzspektren in Anwesenheit von Niederschlag; und

Fig. 10 und 11    Diagramme der Varianzen der Signalleistungsunterschiede zu den in den Fig. 8 und 9 dargestellten aufeinanderfolgenden Messungen.

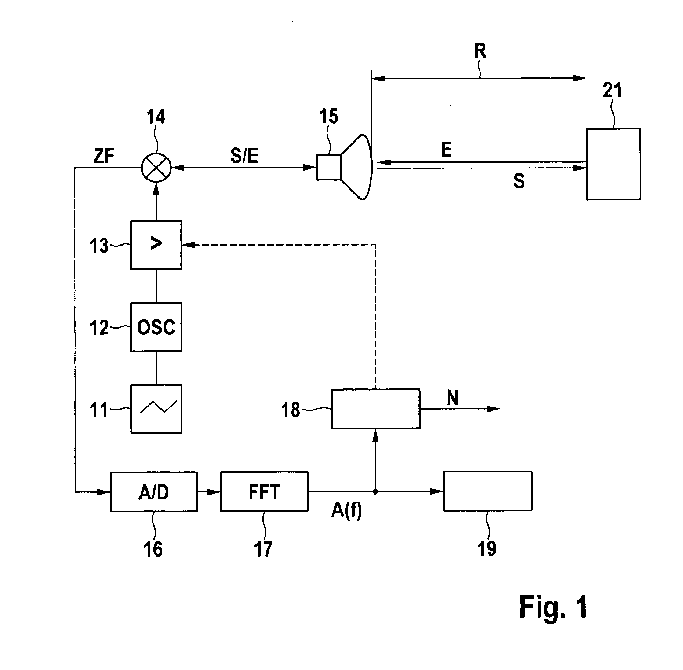

Der in Fig. 1 schematisch im Blockschaltbild dargestellte Radarsensor weist einen Rampengenerator 11 zur Bereitstellung von Frequenz-Modulationsrampen auf. Der Rampengenerator 11 steuert einen Hochfrequenz (HF) - Oszillator 12, der ein entsprechend der Modulationsrampen frequenzmoduliertes Radarsignal generiert. Dieses wird in einem HF-Verstärker 13 verstärkt und über einen Mischer 14 als Sendesignal S einer Sende- und Empfangsantenne 15 zugeführt. Anstelle der gezeigten Anordnung mit einem monostatischen Antennenkonzept, bei dem Sende- und Empfangsantenne identisch sind, kann auch ein bistatisches Konzept vorgesehen sein, bei dem Send- und Empfangsantenne getrennt sind.

Ein von der Sende- und Empfangsantenne 15 abgestrahltes Sendesignal S wird, wie beispielhaft in Fig. 1 dargestellt, von einem Objekt 21, das sich in einem Abstand R vom Radarsensor befindet, reflektiert. Das reflektierte Signal wird von der Sende- und Empfangsantenne 15 empfangen und als Empfangssignal E wiederum dem Mischer 14 zugeführt. Der Mischer 14 mischt das Empfangssignal E mit einem Teil des Sendesignals S und gibt das Mischprodukt als Zwischenfrequenzsignal ZF aus. Das Zwischenfrequenzsignal ZF wird nach Digitalisierung in einem Analog/Digital- Wandler 16 einer Frequenzanalyse unterworfen. Dazu ist der Ausgang des Analog/Digital-Wandlers 16 mit einem Frequenzanalysator 17 verbunden, der beispielsweise eine schnelle Fourier-Transformation (FFT) durchführt und an seinem Ausgang ein Amplitudenspektrum A(f), also die Amplitude des Zwischenfrequenzsignals ZF in Abhängigkeit der Frequenz f, angibt. Das Amplitudenspektrum A(f) wird zum einen einer Detektionseinrichtung 18 zugeführt, die eine Niederschlagsdetektion durchführt und bei erkanntem Niederschlag ein Niederschlagssignal N ausgibt, das beispielsweise einer Fahrassistenzeinrichtung zugeführt wird und deren Steuerverhalten beeinflusst. Das Amplitudenspektrum A(f) wird zudem einer Auswerteeinheit 19 bereitgestellt, die vom Radarsensor erfasste Objekte 21 erkennt und deren Abstände und Relativgeschwindigkeiten relativ zum Radarsensor ermittelt. Alternativ kann vorgesehen sein, dass der Frequenzanalysator 17 anstelle von Amplitudenspektren A(f) Leistungsspektren P(f) ausgibt, anhand derer die weitere Auswertung erfolgt.

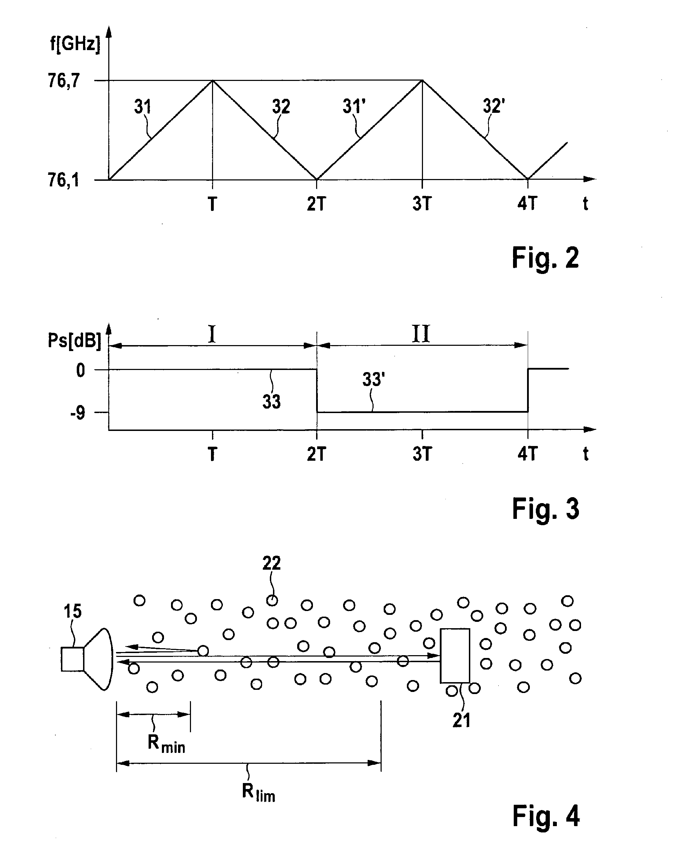

Der in Fig. 1 dargestellte Radarsensor arbeitet nach dem FMCW-Verfahren. Die durch den Rampengenerator 11 gesteuerte Zeitabhängigkeit der Frequenz $f_s$ des Sendesignals S ist in Fig. 2 beispielhaft dargestellt. Die Frequenz $f_s$ ist rampenförmig moduliert, mit einer abwechselnden Folge von steigenden und fallenden Modulationsrampen 31, 32, 31' und 32'. Diese Modulationsrampen haben jeweils eine Dauer T (hier z. B. 2 ms) und einem Modulationshub von z. B. 0,6 GHz. Die gezeigten Modulationsrampen 31 und 31' haben eine identische Modulation (gleiche Steigung und Dauer der Modulationsrampe), und entsprechendes gilt auch für die Modulationsrampen 32 und 32'. Im gezeigten Beispiel ist der Absolutwert der Steigungen der Modulationsrampen 31 und 32, bzw. 31' und 32' gleich. Dieses muss jedoch nicht so sein, es können auch Modulationsrampen mit unterschiedlichen absoluten Steigungen vorgesehen sein. Auch sind Modulationszyklen denkbar, die mehr als zwei unterschiedliche Modulationsrampen umfassen.

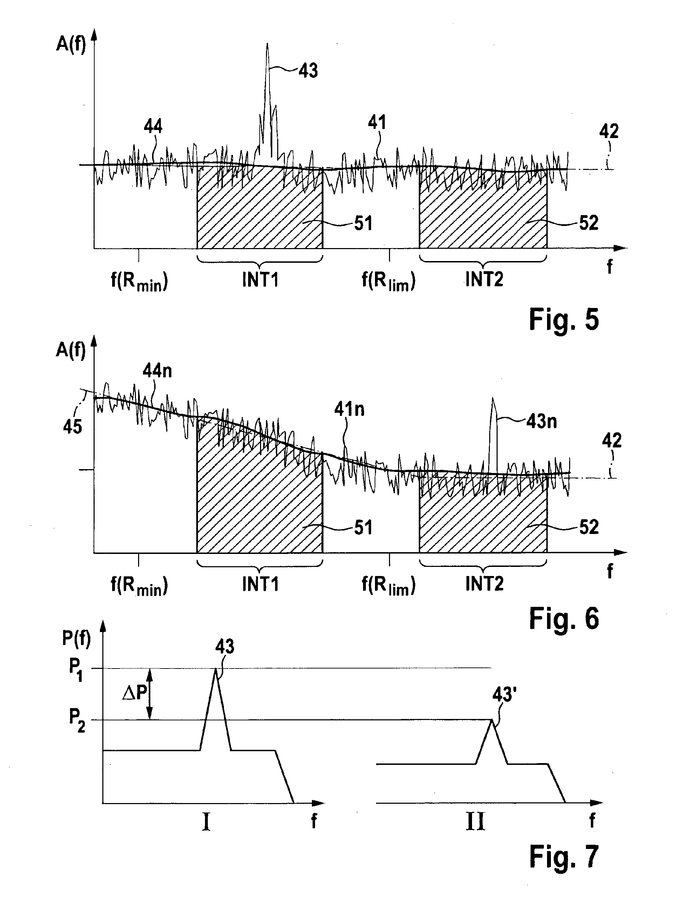

Die abgestrahlte Sendeleistung $P_s$ des Sendesignals S kann dabei für alle Modulationsrampen 31, 31', 32, 32' gleich sein. In bestimmten Fällen, wie beispielsweise im Zusammenhang mit den Figuren 7 bis 11 dargestellt, ist es jedoch vorteilhaft, die Sendeleistung $P_s$ zu variieren. Dazu kann der Verstärker 13 durch die Detektionseinrichtung 18 so angesteuert werden, dass das Sendesignal während des Durchfahrens der Modulationsrampen 31' und 32' mit einer geringeren Sendeleistung $P_s$ emittiert wird als während der Modulationsrampen 31 und 32. Dies ist in Fig. 3 gezeigt, wo die Modulationsrampen 31 und 32 zu einer Periode I und die Modulationsrampen 31', 32' zu einer Periode II zusammengefasst sind. Während der Periode II ist die Sendeleistung $P_s$ gegenüber der Periode I um 9 dB herabgesetzt, wie an den Kurveabschnitten 33 und 33' zu erkennen ist. Dieses Schema wird entsprechend in den nachfolgenden Perioden zyklisch wiederholt. Während des Durchfahrens einer jeden Modulationsrampe wird ein Amplitudenspektrum A(f) des Zwischenfrequenzsignals ZF ermittelt und der Detektionseinrichtung 18 für Niederschlag und der Auswerteeinheit 19 zugeführt.

Erfindungsgemäß werden zur Detektion von Niederschlag die vom Radarsensor empfangenen Signale anhand von zwei verschiedenen Kriterien ausgewertet, wobei sich eines der Kriterien auf Signalen bezieht, die während des Durchfahrens einer Modulationsrampe empfangen werden, und ein zweites der Kriterien auf einen Vergleich von Signalen bezieht, die beim Durchfahren von mindestens zwei aufeinanderfolgenden Modulationsrampen empfangen werden. Im Folgenden werden die beiden Kriterien anhand von Ausführungsbeispielen näher erläutert. Ein entsprechendes Verfahren zum Auswerten der Signale und zum Überprüfen der Kriterien kann dabei z.B. von dem in Fig. 1 gezeigten Radarsensor ausgeführt werden.

Fig. 4 illustriert zunächst den Einfluss von Niederschlag 22, hier beispielhaft als Regentropfen dargestellt, auf das von der Sende- und Empfangsantenne 15 empfangene Radarsignal. Wie durch Pfeile symbolisiert wird, wird das Sendesignal S nicht nur von dem Objekt 21 reflektiert, sondern auch an einzelnen Tropfen des Niederschlags 22. Dieses führt zum einen zu einer Vielzahl von Rückstreusignalen, was einer diffusen Streuung des Sendesignals gleichkommt, und zum anderen in einer Schwächung des Signals, das nach Reflektion am Objekt 21 von der Sende- und Empfangsantenne 15 empfangen wird. Bei einer Relativgeschwindigkeit von Null gegenüber dem Radarsensor können Objekte,

4

die näher als ein Mindestabstand $R_{min}$ vom Radarsensor beabstandet sind, aufgrund der geringen Laufzeit der an ihnen reflektierten Signale vom Radarsensor nicht detektiert werden - im Zwischenfrequenzsignal ZF unterscheiden sie sich in ihrer Frequenz zu wenig vom Sendesignal S und können von diesem nicht getrennt werden. Unter Berücksichtigung einer von Null verschiedenen Relativgeschwindigkeit der Objekte gegenüber dem Radarsensor kann sich der Mindestabstand $R_{min}$ abhängig von der Relativgeschwindigkeit jedoch bis hinunter zum Wert Null verringern. Für Objekte, die so klein sind wie die Tropfen des Niederschlags 22 und entsprechend eine geringe Rückstreuung aufweisen, besteht zudem ein maximaler Detektionsabstand $R_{lim}$, der typischerweise im Bereich von 10 bis einigen 10 Metern liegt. Diese Detektionsgrenzen sind in Fig. 4 beispielhaft eingezeichnet. Nur in dem Abstandsbereich zwischen $R_{min}$ und $R_{lim}$ hebt sich der Regenclutter durch Signalrückstreuung an den Niederschlagstropfen über einen Rauschuntergrund des Radarsensors.

Fig. 5 zeigt mit der Kurve 41 einen typischen Verlauf eines Amplitudenspektrums A(f) für den Fall, dass kein Niederschlag vorhanden ist. Im gezeigten Beispiel repräsentiert ein Peak 43, der sich deutlich von einem Rauschuntergrund 42 abhebt, ein geortetes Objekt 21. Unter der Annahme, dass die Regentropfen eine vernachlässigbare horizontale Geschwindigkeit relativ zum Untergrund haben und sich somit die horizontale Relativgeschwindigkeit zum Radarsensor aus der Fahrzeuggeschwindigkeit ergibt, können die Detektionsgrenzen $R_{min}$ und $R_{lim}$ für die Detektion von Niederschlag in entsprechende Frequenzen $f(R_{min})$ und $f(R_{lim})$ umgesetzt werden, die auf der Abszisse in Fig. 5 eingetragen sind. Das geortete Objekt 21 befindet sich hier also noch innerhalb der Detektionsgrenzen für Niederschlag. Abgesehen von dem Peak 43 ist für alle übrigen Frequenzen (und somit Abstände) die mittlere Höhe der Kurve 41 durch den Pegel des Rauschuntergrunds 42 gegeben, der näherungsweise über den gesamten Abstandsbereich konstant ist.

Zum Vergleich zeigt Fig. 6 den Verlauf einer Kurve 41n eines Amplitudenspektrums A(f) beim Vorhandensein von Niederschlag 22. Ein Peak 43n repräsentiert hier wiederum ein Objekt 21, z.B. ein Fahrzeug, dessen Abstand hier größer ist als der Grenzabstand $R_{lim}$. Abgesehen vom unterschiedlichen Abstand der Objekte 21 in den in den Fig. 5 und 6 dargestellten Situationen, ist die niedrigere Höhe des Peaks 43n auch auf eine Schwächung des Radarsignals durch die Reflexion an den Tropfen und Absorption durch die Tropfen des Niederschlags 22 zurückzuführen. Andererseits bewirkt die Reflexion an diesen Tropfen den erwähnten Regenclutter, der in Fig. 6 außerhalb des Peaks 43n in Form eines Untergrundsignals 45 zu erkennen ist, das höher als der Rauschuntergrund 42 ist. Ab dem Grenzabstand $R_{lim}$ ist das Untergrundsignal 45 des Regenclutters nicht mehr vom Rauschuntergrund 42 zu unterscheiden und daher nicht mehr detektierbar.

Eine Detektion von Niederschlag ist nun in einer Ausgestaltung des ersten Kriteriums dadurch möglich, dass das Amplitudenspektrum A(f), oder das Leistungsdichtespektrum $(A(f))^2$ als das Quadrat des Amplitudenspektrums, über ein erstes Frequenzintervall 51 integriert wird, das einem Abstandsintervall IN1 entspricht, das zwischen dem Mindestabstand $R_{min}$ und dem Grenzabstand $R_{lim}$ liegt. Da der Rauschuntergrund 42 für einen gegebenen Typ des Radarortungsgerätes bekannt ist, kennt man den Wert, der im niederschlagsfreien Fall für dieses Integral zu erwarten ist. Wenn der aktuelle Wert des Integrals deutlich größer ist, so deutet dies auf die Anwesenheit von Niederschlag hin. Störeinflüssen, insbesondere Temperatur- und Alterungseffekte, die die Empfindlichkeit des Radarortungsgerätes beeinflussen, und spezielle Einbaubedingungen des Radarsensorskönnen jedoch die Höhe des Rauschuntergrunds 42 beeinflussen.

Um eine größere Unabhängigkeit gegenüber solchen Störeinflüssen zu erreichen, kann in einer weiteren Ausgestaltung des ersten Kriteriums für die Niederschlagsdetektion nicht nur über das Intervall INT1 integriert werden, das unterhalb des Grenzabstands $R_{lim}$ liegt, also in den Bereichen, in denen Regenclutter auftreten kann, sondern auch über einen zweiten Frequenzbereich 52, der einem zweiten Abstandsbereich INT2 entspricht, der oberhalb des Grenzabstands $R_{lim}$ liegt, also in dem Bereich, in dem die Leistungsdichte außerhalb von Objektpeaks nur durch den Rauschuntergrund 42 bestimmt ist. Die Breite des zweiten Abstandsbereichs INT2 kann gleich der des ersten Abstandsintervalls INT1 sein. Zur Detektion von Niederschlag wird nicht alleine das Integral INT1 herangezogen, sondern das Verhältnis des Integrals INT 1 zum Integral INT2.

Wenn sich jedoch, wie in dem in Fig. 5 illustrierten Fall, mindestens ein Objekt 21 (Peak 43) in dem Abstandsintervall INT1 befindet, über das bei der Niederschlagsdetektion integriert werden soll, so würde auch im niederschlagsfreiem Fall der Peak 43 dazu führen, dass der Wert des Integrals INT 1 gegenüber dem Integral INT 2 zunimmt und sich deren Verhältnis ändert. Es ließe sich nicht entscheiden, ob die Zunahme des Integrals über dem Intervall INT 1 allein durch das Objekt oder zusätzlich auch durch Niederschlag verursacht wird.

Daher wird zur Bestimmung der Integrale das Amplitudenspektrum A(f) bevorzugt nicht unmittelbar integriert, sondern es wird zunächst einer Filterprozedur unterzogen, die Einzelpeaks unberücksichtigt lässt. Das Ergebnis einer solchen Filterprozedur ist in den Fig. 5 und 6 als Kurve 44 bzw. 44n eingetragen. Die Kurven 44 und 44n folgen einem geglätteten Verlauf der Kurven 41 bzw. 41n, wobei jedoch die von einem Objekt herrührenden Peak 43 bzw. 43n gewissermaßen "ausblendet" sind. Die Integrale über die Intervalle INT1 und INT2 werden nun durch Integration der Kurven 44 und 44n und nicht der Kurven 41 und 41n bestimmt, so dass die erhaltenen Werte möglichst unabhängig davon sind, ob sich in dem Intervall INT1 ein Objekt befindet oder nicht.

In Radarsensoren ist häufig vorgesehen, anhand einer Rausch-Schätzung eine Detektionsschwelle für jeden Frequenz- bzw. Abstandswert zu bestimmen, die ein von einem Objekt verursachter Peak 43, 43n mindestens überragen muss, damit das entsprechende Objekt sicher detektiert werden kann. Die Kurven 44 und 44n, über die zur Ermittlung der Integrale über die Intervalle INT1 und INT2 integriert wird, verlaufen im Wesentlichen parallel zu solchen Detektionsschwellen und können auf analoge Weise gewonnen werden oder aus solchen Detektionsschwellen ermittelt werden.

Zur Überprüfung des ersten Kriteriums weist die in Fig. 1 gezeigte Detektionseinrichtung 18 eine Vergleichsstufe auf, die dazu dient, die über die ersten und zweiten Abstandsbereiche INT1 und INT2 gebildeten Integrale miteinander zu vergleichen und beispielsweise das Verhältnis dieser beiden Integrale zueinander zu bestimmen. Dieses Verhältnis liefert unmittelbar ein Maß für die Stärke des Niederschlags, wobei ein Verhältnis in der Nähe von 1 den niederschlagsfreien Zustand repräsentiert. Übersteigt das Verhältnis einen vorgegebenen Wert größer 1, ist das erste Kriterium der Niederschlagsdetektion erfüllt. Zudem kann eine Mindestgröße für das Integral im ersten Abstandsbereich INT definiert sein, die unabhängig vom Verhältnis der beiden Integrale überschritten werden muss, bevor das erste Kriterium als erfüllt angesehen wird (Mindest-Regenrückstreuleistung). Bei Vorhandensein von mehreren Objekten im ersten Abstandsbereich INT1 kann jedoch trotz der beschriebenen Filterprozedur zur Ausblendung von Objektpeaks das erste Kriterium in Abwesenheit von Niederschlag fälschlicherweise erfüllt sein. Diesbezüglich problematische Fahrsituationen sind beispielsweise Tunnel- oder Gassenfahrten.

Das zweite Kriterium bezieht sich auf einen Vergleich von mindestens zwei Amplitudenspektren A(f) des Zwischenfrequenzsignals ZF, die während mindestens zwei nacheinander durchlaufenen Modulationsrampen gewonnen werden.

Fig. 7 zeigt beispielhaft zwei schematische Leistungsspektren der empfangenen spektralen Leistungsdichte $P(f)=(A(f))^2$, die in zwei aufeinanderfolgenden Modulationsrampen mit identischer Modulation, beispielsweise den Modulationsrampen 31 und 31' gewonnen wurden. Als Beispiel wurde wieder angenommen, dass sich im Ortungsbereich ein einzelnes Objekt 21 befindet, das im Spektrum jeweils als Peak 43 bzw. 43' zu erkennen ist. Die beiden Spektren unterscheiden sich in der Sendeleistung des abgestrahlten Sendesignals, das gemäß dem in Figur 3 gezeigten Diagramm verändert wurde.

In der Periode I (links in Fig. 7) hat der Peak 43 bei der Scheitelfrequenz die maximale Signalleistung $P_1$. In der Periode II (rechts in Fig. 7) hat er dagegen aufgrund der Absenkung der Sendeleistung nur die kleinere maximale Signalleistung $P_2$. Wenn kein Niederschlag und keine sonstigen diffusen Verluste vorhanden sind, sollte die Differenz $\Delta P$ zwischen den Signalleistungen $P_1$ und $P_2$ nur von der Leistungsabsenkung abhängig sein und daher einen im wesentlichen konstanten Wert behalten, wenn das betreffende Objekt 21 über mehrere aufeinanderfolgende Zyklen oder, genauer, Zykluspaare mit abwechselnd erhöhter und abgesenkter Sendeleistung, verfolgt wird. Diese Annahme ist deshalb gerechtfertigt, weil die Dauer eines einzelnen Zyklus in der Praxis beispielsweise nur 4 ms beträgt und ein reales Objekt wie etwa ein vorausfahrendes Fahrzeug eine verhältnismäßig geringe Dynamik aufweist, so dass sich an der Scheitelhöhe des Peaks 43 innerhalb eines Zeitraums von einigen Millisekunden oder einigen 10 Millisekunden praktisch nichts ändern sollte.

Anders verhält es sich hingegen bei Niederschlag. Jeder der Tropfen des Niederschlags 22 wirkt, wie in Fig. 4 gezeigt, wie ein kleines Reflexionsziel oder Objekt, das einen kleinen Peak im Spektrum nach Fig. 7 hinterlässt. Diese Peaks sind über ein breites Frequenzband verstreut und tragen wie oben beschrieben als sogenannter Regenclutter zum Untergrund der Spektren in Fig. 7 bei.

Betrachtet man den Signalleistungsunterschied $\Delta P$, so sollte dieser in Abwesenheit von Niederschlag im wesentlichen konstant sein. Die hohe relative Dynamik der Tropfen des Niederschlags 22 in vertikaler Richtung im Nahbereich führt jedoch auch schon in dem Zeitintervall von 4 ms, das zwischen den Modulationsrampen 31 und 31' liegt, zu einer deutlichen statistischen Schwankung des Signalleistungsunterschiedes $\Delta P$. Die Streuung oder Varianz des Signalleistungsunterschiedes $\Delta P$ ist deshalb ein geeignetes Maß für das Vorhandensein von Niederschlag.

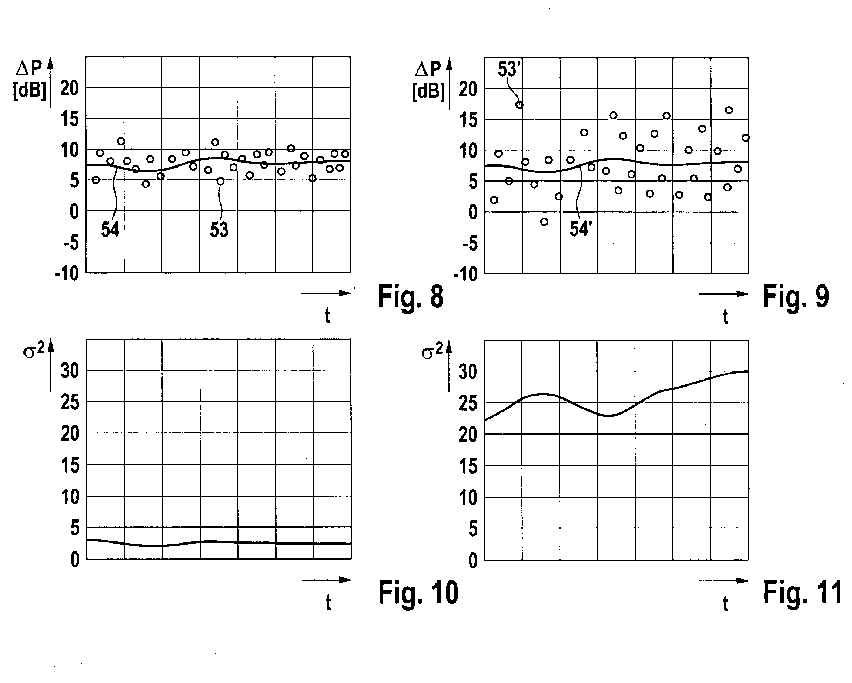

Die Fig. 8 bis 11 illustrieren Ergebnisse von Versuchsmessungen, die diesen Effekt verdeutlichen.

Die Versuchsmessungen erstreckten sich jeweils über einen Zeitraum von etwa 10 Minuten. In Fig. 8 sind die Ergebnisse einiger Einzelmessungen des Signalleistungsunterschiedes $\Delta P$ innerhalb dieses Zeitraums gegen die Zeit t aufgetragen. Bestimmt wurde der Signalleistungsunterschied $\Delta P$ hier anhand der aufintegrierten Signalleistungen in einem vorgegebenen Bereich des Signalspektrums und nicht, wie in Fig. 7 illustriert, anhand der Höhe eines Objektpeakts. Jede einzelne Bestimmung des Signalleistungsunterschiedes $\Delta P$ wird durch einen Messpunkt 53 repräsentiert, der den Signalleistungsunterschied $\Delta P$ zwischen zwei aufeinanderfolgenden Zyklen angibt. Die Kurve 54 in Fig. 8 gibt den durch Tiefpassfilterung der Einzelmessungen (mit geeigneter Zeitkonstante) gebildeten Mittelwert an.

Die in Fig. 8 illustrierten Ergebnisse wurden bei einer Trockenmessung aufgenommen, d.h., es wurde nur das Objekt 21 detektiert und es war kein Niederschlag vorhanden.

Fig. 9 zeigt dagegen die entsprechenden Messpunkte 53' und die gemittelte Kurve 54' für eine Messung in Anwesenheit von Niederschlag. Es ist zu erkennen, dass der Niederschlag auf den mittleren Signalleistungsunterschied (Kurve 54') praktisch keinen Einfluss hat, aber zu einer deutlich stärkeren Streuung der durch die Messpunkte 53' symbolisierten Einzelmessungen führt. Diese Streuung oder Varianz bildet daher die Grundlage für das zweite Kriterium der Detektion von Niederschlag und darüber hinaus auch für eine quantitative Bestimmung der Niederschlagsstärke.

Wird eine Folge von aufeinanderfolgenden Einzelmessungen betrachtet, in der k den Index der Einzelmessungen angibt, so kann die Varianz beispielsweise nach folgender Formel bestimmt werden:

$$\sigma_k^2 = a\,(\Delta P_k - AVE\,(\Delta P_k))^2 + (1\text{-}a) \cdot \sigma_{k-1}^2 \qquad\qquad (1)$$

Darin ist:

$\sigma_k^2$      die geschätzte Varianz des Signalleistungsunterschieds bei der Einzelmessung k,
a      ein Filterkoeffizient,
$\Delta P_k$      das Resultat der aktuellen Einzelmessung und
$AVE\,(\Delta P_k)$      der (geschätzte) Mittelwert des Signalleistungsunterschieds bei der Einzelmessung k.

Als geschätzter Mittelwert $AVE((\Delta P_k)$ kann der Tiefpass-gefilterte Wert verwendet werden, der durch die Kurven 54 und 54' in den Fig. 8 und 9 angegeben wird. Ein geeigneter Wert für den Filterkoeffizienten a ist beispielsweise 0,05.

Fig. 10 und 11 zeigen den zeitlichen Verlauf der Varianz $\sigma_k^2$ gemäß Formel (1) für die Trockenmessung entsprechend Fig. 8 bzw. die Messung bei Niederschlag entsprechend Fig. 9. Bei der Niederschlagsmessung gemäß Fig. 11 pendelt sich die Varianz sehr schnell auf ein Niveau ein, das deutlich über dem Niveau der Varianz für eine Trockenmessung gemäß Fig. 10 liegt.

Zur Überprüfung des zweiten Kriteriums weist die in Fig. 1 gezeigte Detektionseinrichtung 18 daher eine Auswerteeinheit zur Bestimmung der Varianz $\sigma_k^2$ auf und eine Vergleichsstufe, die die Varianz $\sigma_k^2$ mit einem geeigneten Schwellenwert vergleicht. Wird der Schwellenwert überschritten, wird das zweite Kriterium als erfüllt angesehen. Der Vorteil des hier beschriebenen Verfahrens im Zusammenhang mit dem zweiten Kriterium besteht darin, dass die Detektion von Niederschlag auch und gerade in Gegenwart von Objekten 21, wie z.B. vorausfahrenden Fahrzeugen und dergleichen, möglich ist. Auch eine hohe Objektdichte, die sich negativ auf die Zuverlässigkeit des ersten Kriteriums auswirkt, schränkt die Anwendbarkeit dieses Verfahrens nicht ein.

Bei dem hier beschriebenen Ausführungsbeispiel zum zweiten Kriterium wurde die Leistung des Sendesignals zyklisch variiert. Für die Erkennung der Empfindlichkeitseinbuße wurden mit dem Peak 43 ein Merkmal im Amplituden- bzw. Leistungsspektrum gewählt, das empfindlich auf die Änderung der Sendeleistung reagiert. Bedingt durch die relative Messung mit schnell aufeinanderfolgenden Modulationsrampen reagiert die Messung wenig empfindlich auf Störfaktoren wie Temperatur oder Alterung des Radarsensors und dergleichen. Die Auswertung der Amplitude (oder Leistung) solcher Merkmale sollte vorzugsweise für Modulationsrampen erfolgen, bei denen die Sendeleistung unterschiedlich war, die jedoch zeitlich möglichst wenig auseinander liegen, so dass die Dynamik von georteten Objekten praktisch noch keinen Einfluss auf die Merkmale haben kann. Wenn beispielsweise ein Messzyklus zwei oder mehr unterschiedliche Modulationsrampen umfasst, ist es zweckmäßig, die Sendeleistung nach jedem Messzyklus zu verändern. Während gemäß Fig. 3 nur ein Wechsel zwischen zwei Sendeleistungsniveaus erfolgt, ist im Allgemeinen auch ein Wechsel zwischen drei oder mehr Sendeleistungsniveaus möglich. Andererseits muss der Wechsel der Sendeleistung nicht zwingend nach jedem Messzyklus erfolgen. Beispielsweise kann es genügen, nach mehreren Messzyklen mit konstanter Sendeleistung einen einzelnen Messzyklus einzufügen, in dem die Sendeleistung herabgesetzt ist. Ebenso ist es auch möglich, die Detektionseinrichtung 18 zeitweise abzuschalten und nur in gewissen Intervallen zu aktivieren, wobei sie dann den Verstärker 13 so ansteuert, dass das System in einen speziellen Blindheitsmodus übergeht, in dem die Modulation und die Leistungsabsenkung des Sendesignals im Hinblick auf die Blindheitserkennung bzw. die Erkennung von diffusen Verlustquellen optimiert sind.

Alternativ ist es auch möglich, das im Zusammenhang mit dem zweiten Kriterium dargestellte Verfahren bei konstanter Sendeleistung durchzuführen. Auch dann ist eine erhöhte Varianz in der Amplitude (oder Leistung) von Merkmalen, wie z.B. Peaks, beim Vorliegen von Niederschlag zu beobachten. Der Unterschied ist unter Umständen jedoch nicht so ausgeprägt.

Wie bereits erwähnt, ist ein Unterschied des zweiten Kriteriums zum ersten Kriterium, dass auch eine hohe Objektdichte, z.B. bei einer Gassen- oder Tunnelfahrt, nicht zu einer Fehlerkennung von Niederschlag führt. Demgegenüber können jedoch andere Einflüsse fälschlicherweise zu einer Erfüllung des zweiten Kriteriums führen, wie im Folgenden ausgeführt ist.

Wie in Formel (1) angegeben, wird zur Bestimmung der Varianz $\sigma_k^2$ der Signalleistungsunterschiede der Mittelwert des Signalleistungsunterschieds $AVE\,(\Delta P_k)$ für die Einzelmessung k benötigt. Es bietet sich an, diesen Mittelwert mittels einer Tiefpassfilterung aus mehreren aufeinanderfolgenden Messungen zu ermitteln (gleitender Mittelwert). Die Zeitkonstante des Tiefpassfilters führt jedoch bei schneller Änderung des Signalleistungsunterschieds zu einem falschen Wert für den Mittelwert (Nachlaufens des Filters), wodurch auch die Varianz $\sigma_k^2$ falsch und insbesondere zu groß bestimmt wird. Eine schnelle Änderung des Signalleistungsunterschieds kann aus einer plötzlichen Erblindung des Radarsensors resultieren, zum Beispiel durch auf seine Sende- und Empfangsantenne oder deren Radarlinse- oder -abdeckung (Radom) gespritzten Schneematsch. Als Folge der zu groß bestimmten Varianz $\sigma_k^2$ kann das zweite Kriterium fälschlicherweise erfüllt werden. Plötzliche Erblindung hat jedoch keinen Einfluss auf das erste Kriterium, bei dem ja verschiedene Frequenzbereiche eines Spektrums verglichen werden, die gleichermaßen von der Erblindung betroffen sind.

Auch eine Situation, in der insgesamt wenig rückgestreute Leistung empfangen wird, zum Beispiel bei einer Fahrt auf einer verschneiten, aber freien Landstraße (keine anderen Fahrzeuge im Erkennungsbereich), ist im Hinblick auf eine fälschliche Erfüllung des zweiten Kriteriums problematisch, da die Streuung aufgrund der geringen empfangenen Leistung im Allgemeinen ansteigt. Auch diese Situation ist jedoch unproblematisch für das erste Kriterium, da bei insgesamt geringer rückgestreuter empfangener Leistung auch eine Mindest-Regenrückstreuleistung bei Trockenheit nicht überschritten werden wird und folglich das erste Kriterium nicht erfüllt sein wird.

Die jeweils fehlerträchtigen Situationen, die zu einer scheinbaren Erkennung von Niederschlag bei einem der Kriterien führen können, sind also gerade für das jeweils andere Kriterium unproblematisch.

Die Detektionseinrichtung 18 ist daher so eingerichtet, dass sie Niederschlag nur dann als erkannt detektiert und an ihrem Ausgang das Niederschlagssignal N ausgibt, wenn das erste und das zweite Kriterium gleichzeitig erfüllt sind. Dabei kann zudem vorgesehen sein, dass Niederschlag erst dann als festgestellt gilt, wenn beide Kriterien länger als eine vorgegebene Zeitspanne gleichzeitig erfüllt sind.

In den zuvor beschriebenen Beispielen wurde die Auswertung der empfangenen Radarsignale anhand des Amplitudenspektrums A(f) des Zwischenfrequenzsignal ZF vorgenommen. In einer modifizierten Ausführungsform ist es jedoch auch möglich, das im Analog/Digital-Wandler 16 erhaltene Zeitsignal des Zwischenfrequenzspektrums ZF direkt auszuwerten.

## Patentansprüche

1. Verfahren zur Detektion von Niederschlag mit einem Radarsensor, der ein Sendesignal (S) emittiert, dessen Frequenz ($f_S$) periodisch in aufeinanderfolgenden Modulationsrampen (31, 32) verändert wird, wobei von dem Radarsensor empfangene Signale mit einem Teil des Sendesignals (S) zu einem Zwischenfrequenzsignal (ZF) gemischt werden und das Zwischenfrequenzsignal (ZF) einer Spektralanalyse unterworfen wird und das resultierende Amplitudenspektrum (A(f)) oder Leistungsdichtespektrum (P(f)) anhand von zwei unterschiedlichen Kriterien ausgewertet wird und Niederschlag (22) dann als erkannt gilt, wenn beide Kriterien gleichzeitig erfüllt sind,
**dadurch gekennzeichnet, dass**
ein erstes Kriterium Signale betrifft, die bei einem Durchfahren einer Modulationsrampe (31, 32) empfangen werden, wobei zur Auswertung des ersten Kriteriums

   - das empfangene Amplitudenspektrum (A(f)) oder das Leistungsdichtespektrum (P(f)) über einen ersten Frequenzbereich (51) integriert wird, der einem ersten Abstandsintervall (INT1) entspricht, das unterhalb eines Grenzabstands ($R_{lim}$) für die Detektion von Niederschlag (22) liegt; und
   - das erste Kriterium abhängig vom Wert des Integrals über das erste Abstandsintervall (INT1) als erfüllt angesehen wird, oder
   - das Amplitudenspektrum (A(f)) oder das Leistungsdichtespektrum (P(f)) über einen ersten Frequenzbereich (51) integriert wird, der einem ersten Abstandsintervall (INT1) entspricht, das unterhalb eines Grenzabstands ($R_{lim}$) für die Detektion von Niederschlag (22) liegt;
   - das Amplitudenspektrum (A(f)) bzw. das Leistungsdichtespektrum (P(f)) über einen zweiten Frequenzbereich (52) integriert wird, der einem zweiten Abstandsintervall (INT2) entspricht, das oberhalb des Grenzabstands (Rlim) liegt; und
   - das erste Kriterium abhängig vom Verhältnis der Integrale über das erste und das zweite Abstandsintervall (INT1, INT2) als erfüllt angesehen wird,

   und dass ein zweites Kriterium einen Unterschied ($\Delta_{P_k}$ aus den empfangenen Amplitudenspektren (A(f)) oder Leistungsdichtespektren (P(f)) in einem vorgegebenen Frequenzbereich bei dem Durchfahren von mindestens zwei aufeinanderfolgenden Modulationsrampen (31, 31', 32, 32') betrifft und das zweite Kriterium abhängig von der Größe der Varianz ($\sigma^2$) für eine Folge aufeinanderfolgender Messungen der Unterschiede ($\Delta_{P_k}$) bei Überschreitung eines Schwellenwertes als erfüllt angesehen wird.

2. Verfahren nach Anspruch 1, bei dem Niederschlag (22) dann als erkannt gilt, wenn beide Kriterien länger als eine vorgegebene Zeitspanne gleichzeitig erfüllt sind.

3. Verfahren nach Anspruch 1 oder 2, bei dem bei der Auswertung des ersten Kriteriums die Signale vor der Integration einer Filterung unterzogen werden, die durch geortete Objekte (21) verursachte Peaks (43, 43n) unterdrückt.

4. Verfahren nach einem der Ansprüche 1 bis 3, bei dem eine abgestrahlte Leistung (PS) des Sendesignals für die mindestens zwei aufeinanderfolgenden Modulationsrampen (31, 31', 32, 32') unterschiedlich ist.

5. Radarsensor, insbesondere für Fahrzeuge, arbeitend nach dem FMCW-Verfahren mit aufeinanderfolgenden Modulationsrampen (31, 32) zur periodischen Frequenzmodulation eines Sendesignals (S), der zur Durchführung eines Verfahrens nach einem der Ansprüche 1 bis 4 eingerichtet ist.

**Claims**

1. Method for detecting precipitation with a radar sensor, which emits a transmitted signal (S), the frequency ($f_S$) of which is varied periodically in successive modulation ramps (31, 32), signals received from the radar sensor being mixed with part of the transmitted signal (S) to form an intermediate frequency signal (ZF), and the intermediate frequency signal (ZF) being subjected to spectral analysis, and the resultant amplitude spectrum (A(f)) or power density spectrum (P(f)) being evaluated by using two different criteria, and precipitation (22) then being counted as recognized when both criteria are satisfied simultaneously,

   **characterized in that**
   a first criterion relates to signals which are received during a pass through a modulation ramp (31, 32), wherein, in order to evaluate the first criterion

   - the received amplitude spectrum (A(f)) or the power density spectrum (P(f)) is integrated over a first frequency range (51) which corresponds to a first distance interval (INT1) which lies below a limiting distance ($R_{lim}$) for the detection of precipitation (22); and
   - the first criterion is viewed as satisfied on the basis of the value of the integral over the first distance interval (INT1), or
   - the amplitude spectrum (A(f)) or the power density spectrum (P(f)) is integrated over a first frequency range (51), which corresponds to a first distance interval (INT1) which lies below a limiting distance ($R_{lim}$) for the detection of precipitation (22);
   - the amplitude spectrum (A(f)) or the power density spectrum (P(f)) is integrated over a second frequency range (52), which corresponds to a second distance interval (INT2) which lies above the limiting distance ($R_{lim}$) ; and
   - the first criterion is viewed as satisfied on the basis of the ratio of the integrals over the first and the second distance interval (INT1, INT2),

   and **in that** a second criterion relates to a difference ($\Delta_{Pk}$) formed from the received amplitude spectra (A(f)) or power density spectra (P(f)) in a predefined frequency range during the pass through at least two successive modulation ramps (31, 31', 32, 32'), and the second criterion is viewed as satisfied on the basis of the magnitude of the variance ($\sigma^2$) for a sequence of successive measurements of the differences ($\Delta_{Pk}$) when a threshold value is exceeded.

2. Method according to Claim 1, in which precipitation (22) counts as recognized when both criteria are satisfied simultaneously for longer than a predefined time interval.

3. Method according to Claim 1 or 2, in which, during the evaluation of the first criterion, the signals before the integration are subjected to filtering which suppresses peaks (43, 43n) caused by plotted objects (21).

4. Method according to one of Claims 1 to 3, in which an emitted power (PS) of the transmitted signal is different for the at least two successive modulation ramps (31, 31', 32, 32').

5. Radar sensor, in particular for vehicles, operating in accordance with the FMCW method with successive modulation ramps (31, 32) for the periodic frequency modulation of a transmitted signal (S), which is set up to carry out a method according to one of Claims 1 to 4.

**Revendications**

1. Procédé de détection de précipitations à l'aide d'un capteur radar qui émet un signal d'émission (S) dont la fréquence ($f_S$) est modifiée périodiquement en rampes de modulation (31, 32) successives, les signaux reçus par le capteur radar étant mélangés avec une partie du signal d'émission (S) pour former un signal (ZF) à fréquence intermédiaire et le signal (ZF) à fréquence intermédiaire subissant une analyse spectrale, le spectre d'amplitude (A(f)) ou le spectre de densité de puissance (P(f)) ainsi obtenus étant évalués à l'aide de deux critères différents, la présence de précipitations (22) étant détectée lorsque les deux critères sont satisfaits,
   **caracterisé en ce que**,
   le premier critère concerne des signaux qui sont reçus lors de la traversée d'une rampe de modulation (31, 32), tandis que dans l'évaluation du premier critère :

   le spectre d'amplitude (A(f)) ou le spectre de densité de puissance (P(f)) reçus sont intégrés sur une première plage de fréquence (51) qui correspond à un premier intervalle de distance (INT1) situé en dessous d'une limite de distance ($R_{lim}$) de la détection des précipitations (22), et
   le premier critère étant considéré comme satisfait en fonction de la valeur de l'intégrale sur le premier intervalle de distance (INT1), ou
   le spectre d'amplitude (A(f)) ou le spectre de densité de puissance (P(f)) est intégré sur une première plage de fréquence (51) qui correspond à un premier intervalle de distance (INT1) situé en dessous d'une limite de distance ($R_{lim}$) de la détection de précipitations (22),
   le spectre d'amplitude (A(f)) ou le spectre de densité de puissance (P(f)) sont intégrés sur une deuxième plage de fréquence (52) qui correspond à un deuxième intervalle de distance (INT2) situé au-dessus de la limite de distance ($R_{lim}$), et
   le premier critère étant considéré comme satisfait en fonction du rapport entre les intégrales sur le premier et le deuxième intervalle de distance (INT1, INT2), et
   un deuxième critère concerne une différence ($\Delta_{Pk}$) entre les spectres d'amplitude (A(f)) ou les spectres de densité de puissance (P(f)) reçus dans une plage de fréquences prédéterminée lors de la traversée d'au moins deux rampes de modulation (31 31', 32, 32') successives, le deuxième critère étant considéré comme satisfait en fonction de la grandeur de la variance ($\sigma^2$) pour une succession de mesures successives des différences ($\Delta_{Pk}$) lorsqu'une valeur de seuil est dépassée.

2. Procédé selon la revendication 1, dans lequel la présence de précipitations (22) est détectée si les deux critères sont satisfaits simultanément pendant une durée plus longue qu'un intervalle de temps prédéterminé.

3. Procédé selon les revendications 1 ou 2, dans lequel lors de l'évaluation du premier critère, les signaux subissent avant l'intégration un filtrage qui diminue des pics (43, 43n) provoqués par les objets (21) localisés.

4. Procédé selon l'une des revendications 1 à 3, dans lequel la puissance émise (PS) du signal démission diffère pour les deux ou plusieurs rampes de modulation (31, 31', 32, 32') successives.

5. Capteur radar, en particulier pour véhicules, travaillant selon le procédé FMCW avec des rampes de modulation successives (31, 32) pour moduler périodiquement en fréquence un signal d'émission (S) et conçu pour mettre en oeuvre un procédé selon l'une des revendications 1 à 4.

**Fig. 1**

**Fig. 2**

**Fig. 3**

**Fig. 4**

A(f)

44

43

41

42

51

52

f(R_min)     INT1     f(R_lim)     INT2     f

Fig. 5

A(f)

45

44n

41n

43n

42

51

52

f(R_min)     INT1     f(R_lim)     INT2     f

Fig. 6

P(f)

$P_1$

$\Delta P$

$P_2$

43

43'

I     f     II     f

Fig. 7

Fig. 9

Fig. 11

Fig. 8

Fig. 10

**IN DER BESCHREIBUNG AUFGEFÜHRTE DOKUMENTE**

**In der Beschreibung aufgeführte Patentdokumente**

- WO 0150152 A1
- WO 2005062072 A1

- DE 19945268 A1
- DE 102006054320 A1